(19) **Europäisches Patentamt / European Patent Office / Office européen des brevets**

(11) **EP 4 078 899 B1**

(12) **EUROPEAN PATENT SPECIFICATION**

(45) Date of publication and mention of the grant of the patent:
**25.06.2025 Bulletin 2025/26**

(21) Application number: **20824581.1**

(22) Date of filing: **18.12.2020**

(51) International Patent Classification (IPC):
*H04L 41/16* (2022.01)    *H04L 41/147* (2022.01)
*H04L 41/14* (2022.01)    *G06N 3/02* (2006.01)
*G06N 20/00* (2019.01)    *G06N 3/08* (2023.01)
*G06N 3/063* (2023.01)    *G06N 3/045* (2023.01)

(52) Cooperative Patent Classification (CPC):
**H04L 41/16; G06N 3/045; G06N 3/063; G06N 3/08; H04L 41/145; H04L 41/147**

(86) International application number:
**PCT/EP2020/086987**

(87) International publication number:
**WO 2021/123139 (24.06.2021 Gazette 2021/25)**

(54) **SYSTEMS AND METHODS FOR ENHANCED FEEDBACK FOR CASCADED FEDERATED MACHINE LEARNING**

SYSTEME UND VERFAHREN ZUR VERBESSERTEN RÜCKKOPPLUNG FÜR KASKADIERTES FÖDERIERTES MASCHINELLES LERNEN

SYSTÈMES ET PROCÉDÉS POUR RÉTROACTION AMÉLIORÉE POUR APPRENTISSAGE AUTOMATIQUE FÉDÉRÉ EN CASCADE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2019 PCT/EP2019/086065**

(43) Date of publication of application:
**26.10.2022 Bulletin 2022/43**

(73) Proprietor: **Telefonaktiebolaget LM Ericsson (publ)**
**164 83 Stockholm (SE)**

(72) Inventors:
• **ALABBASI, Abdulrahman**
**164 44 Kista (SE)**
• **VANDIKAS, Konstantinos**
**169 73 Solna (SE)**

• **ZHOHOV, Roman**
**582 22 Linköping (SE)**

(74) Representative: **Zacco Sweden AB**
**P.O. Box 5581**
**Löjtnantsgatan 21**
**114 85 Stockholm (SE)**

(56) References cited:
WO-A1-2018/057302    WO-A1-2019/219846
US-A1- 2018 032 915    US-A1- 2019 042 937

• WEI YANG BRYAN LIM ET AL: "Federated Learning in Mobile Edge Networks: A Comprehensive Survey", ARXIV.ORG, CORNELL UNIVERSITY LIBRARY, 201 OLIN LIBRARY CORNELL UNIVERSITY ITHACA, NY 14853, 26 September 2019 (2019-09-26), XP081483446

**Description**

Technical Field

The present disclosure relates to machine learning and, more specifically, to federated machine learning and even more specifically to cascaded federated machine learning.

Background

Machine learning has many applications including image recognition, speech recognition, traffic prediction, online fraud detection, etc. In recent years, machine learning has been proposed for applications in wireless networks such as, for example, channel estimation and resource allocation. One such application in a cellular communications network such as, e.g., a Third Generation Partnership Project (3GPP) New Radio (NR) or Long Term Evolution (LTE) network, is the use of machine learning for decisions related to secondary carrier handover or selection. Such a decision for a wireless communication device (e.g., a User Equipment (UE)) is made at the network side based on measurements reported by the wireless communication device. The periodicity at which these measurements are reported by the wireless communication device to the network might vary from, e.g., tens of milliseconds to more than hundreds of milliseconds.

One type of machine learning is federated machine learning. Federated machine learning is a type of machine learning that is particularly well-suited for machine learning (ML) models that train on large aggregations of data collected from multiple data sources. On such scenario is a ML model in a cellular communications network that is trained based on data collected at many wireless communication devices. One example of federated machine learning is described in International Patent Application Publication No. WO2018/057302A1 (hereinafter referred to as "the '302 Application).

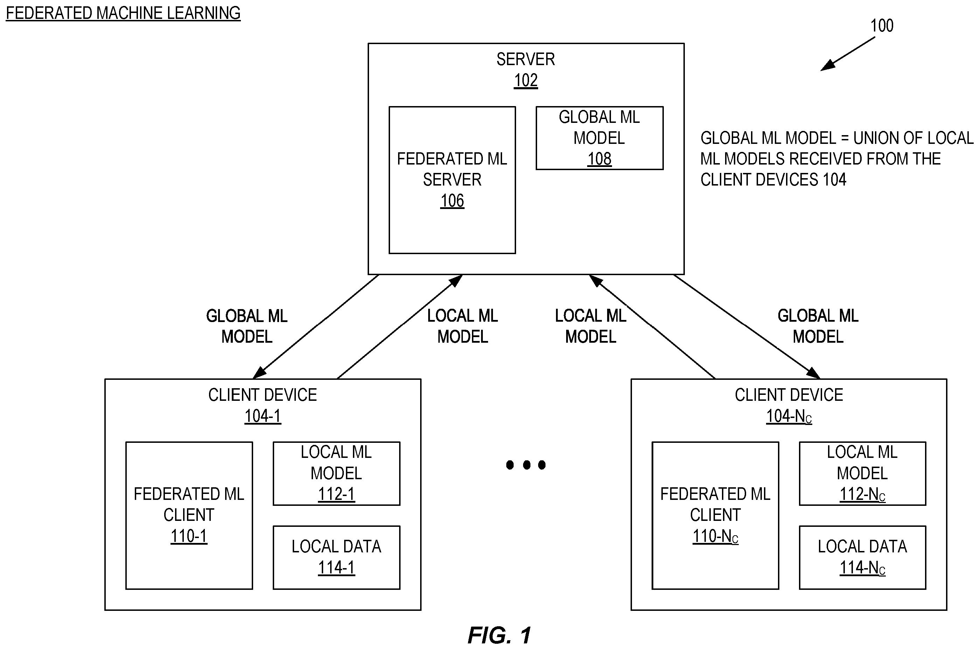

Figure 1 illustrates a system 100 that implements federated machine learning. As illustrated, the system 100 includes a server 102 and multiple client devices 104-1 through 104-$N_D$, which are generally referred to herein collectively as client devices 104 and individually as a client device 104. The server 102 includes a federated ML server function 106 and operates to generate a global ML model 108 as described below. Each client device 104 includes a federated ML client function 110. During a training phase, the federated ML client function 110 operates to train a local ML model 112 based on local data 114. The local data 114 is generally data that is available at the client device 104 such as, for example, measurements performed by the client device 104 and/or other data stored at the client device 104. The federated ML client function 110 sends the local ML model 112 to the server 102.

At the server 102, the federated ML server function 106 aggregates the local ML models 112 received from the client devices 104 to provide the global ML model 108. The federated ML server function 106 provides the global ML model 108 to the client devices 104, and the client devices 104 then update their local ML models 112 based on the received global ML model 108 (e.g., the global ML 108 is stored as the new local ML models 112). The federated ML client function 110 at each client device 104 then performs training of its local ML model 112 based on its local data 114 for the next training epoch and sends the resulting local ML model 112 (or an update relative to the last version of the local ML model 112 sent) to the server 102. The training process continues in this manner until some predefined stopping criteria is reached.

One benefit of this federated machine learning approach is that the local data 114 remains private (i.e., is not shared with the server 102), which is particularly desirable in a cellular communications network where the client devices 104 are wireless communication devices and the respective users desire to maintain the privacy of their data (e.g., their location data). Another benefit is that federated machine learning enables exchange of learnings among the client devices 104. Additional benefits of federated machine learning is that it enables efficient signaling between the server 102 and the client devices 104 and it decreases data transfers since the information that is exchanged between the client devices 104 and the server 102 is the ML model information rather than the local user data.

One problem with conventional federated machine learning particularly when applied in a cellular communications system is that all training is done at the wireless communication devices based on their respective local data, but the network (e.g., base station) may have much more data that would help improve the performance of the ML model. For example, in a cellular communication network, the base station has information such as, e.g., throughput, load, interference information, etc., which could be used to improve training of the local ML models 112. In other words, training of the local ML models 112 solely based on the respective local data 114 results in less than optimal performance. Further, even if performance could be improved by providing network data to the wireless communication devices to be used as input features for training the local ML models 112, in many cases sharing of such network data with the wireless communication devices is not possible or at least undesirable (e.g., a network operator may not want to share detailed network information with the wireless communication devices).

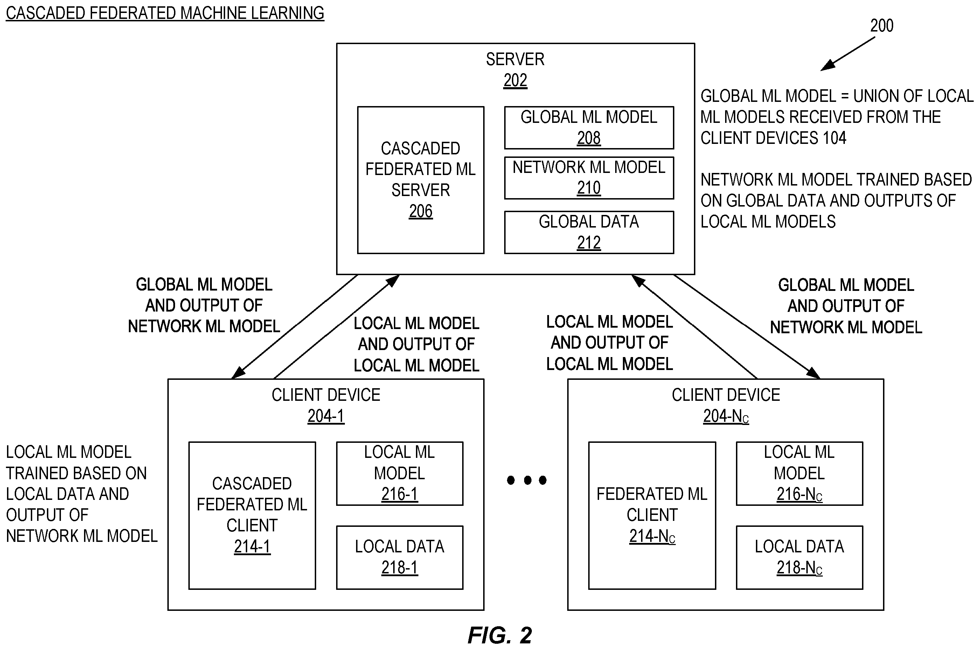

One solution to this problem is disclosed in a non-published internal reference. The above-referenced non-published internal reference disclosed a machine learning scheme referred to as cascaded federated machine learning. As example of the solution described in the above-referenced non-published internal reference is illustrated in Figure 2. In particular, Figure 2 illustrates a system 200 that implements cascaded federated machine learning. As illustrated, the system 200 includes a server 202 and multiple client devices 204-1 through 204-N$_D$, which are generally referred to herein collectively as client devices 204 and individually as a client device 204. The server 202 includes a cascaded federated ML server function 206 and operates to generate a global ML model 208 and to train and use a network ML model 210. The server 202 has access to global data 212. The global data 212 is generally data available at the server 202 such as, e.g., measurements collected at the server 202 and/or network-related information. For example, for a cellular communication network where the server 202 is a base station, the global data 212 may include, e.g., base station identity, cell load, cell identity, etc. Each client device 204 includes a cascaded federated ML client function 214 that operates to train and use a local ML model 216. The client device 204 has access to local data 218. The local data 218 is generally data that is available at the client device 204 such as, for example, measurements performed by the client device 204 and/or other data stored at the client device 204.

As discussed below, the cascaded federated server function 206 at the server 202 generates the global ML model 208 by aggregating the local ML models 216 received from the client devices 204. The cascaded federated server function 206 trains the network ML model 210 to output a value(s) of a parameter(s) based on the global data 212 and values of the output parameter(s) of the local ML models 216 that are also received from the client devices 204. The cascaded federated client function 214 at each client device 204 operates to train the local ML model 216 to output a value(s) for a parameter(s) related to the operation of the client devices 204. For example, the parameter(s) output by the local ML model 16 may include a secondary carrier decision or selection. Note that the parameter(s) output by the network ML model 210 may be the same parameter(s) output by the local ML models 216 or some different parameter(s).

During training, for a particular training epoch, the cascaded federated ML client function 214 at each client device 204 operates to train the local ML model 216 based on the local data 218 and, if available, a value(s) of the output parameter(s) of the network ML model 212 received from the server 202. The cascaded federated ML client function 214 sends, to the server 2020, the local ML model 216 as trained during this training epoch and the value(s) of the parameter(s) output by the local ML model 216 in response to the data (i.e., input features) provided to the local ML model 216 for the training epoch.

At the server 202, the cascaded federated ML server function 206 aggregates the local ML models 216 received from the client devices 204 to provide the global ML model 208. In addition, the cascaded federated ML server function 206 trains the network ML model 210 based on the global data 212 and the values of the output parameter(s) of the local ML models 216 received from the client devices 204. The cascaded federated ML server function 206 provides the global ML model 208 and the output value(s) for the parameter(s) output by the network ML model 210 for the training epoch to the client devices 204. The client devices 204 then update their local ML models 216 based on the received global ML model 208 (e.g., the global ML 208 is stored as the new local ML models 216). The cascaded federated ML client function 214 at each client device 204 then performs training of its (new) local ML model 216 based on its local data 218 and the value(s) of the output parameter(s) of the network ML model 210 received from the server 202 for the next training epoch and sends the resulting local ML model 216 (or an update relative to the last version of the local ML model 216 sent) and value(s) of the output parameter(s) of the local ML model 216 to the server 102. The training process continues in this manner until some predefined stopping criteria is reached.

One benefit of this cascaded federated machine learning approach relative to conventional federated machine learning is that the local ML models 216 are trained based on the value(s) of the output parameter(s) of the network ML model 210. As a result, performance is improved while also avoiding the need to share the global data 212 with the client devices 204.

In the cascaded federated machine learning solution of the above-referenced non-published internal reference, feedback from the server 202 to the client devices 204 to assist in training of the local ML models 216 is provided in the form of value(s) of the output parameter(s) of the network ML model 210. However, there is a need to further improve the cascaded federated machine learning solution in terms of: (a) network footprint and (b) feedback formulation, automation, and optimization with small or not impact on privacy assuming the client devices 204 are not in a position to capture the inner workings of the distributions normalization. In other words, if each of the client devices 204 do not know the normalized distribution of the other client devices, then the privacy objective, on both shared models and data, can still be achieved.

Document WO 2018/057302 A1 discloses efficient communication techniques for transmission of model updates within a federated machine learning framework.

## Summary

Systems and methods are disclosed herein for enhanced feedback for cascaded federated machine learning. The invention is defined in the independent claims as appended. Advantageous features are set out in the dependent claims.

Brief Description of the Drawings

The accompanying drawing figures incorporated in and forming a part of this specification illustrate several aspects of the disclosure, and together with the description serve to explain the principles of the disclosure.

Figure 1 illustrates a system that implements federated machine learning;
Figure 2 illustrates a system and implements cascaded federated machine learning;
Figure 3 illustrates a system that implements a cascaded federated machine learning framework with enhanced feedback in accordance with one example embodiment of the present disclosure;
Figure 4 illustrates an example of the local machine learning model of the client device in accordance with an embodiment of the present disclosure;
Figure 5 illustrates an example of the network machine learning model in accordance with an embodiment of the present disclosure;
Figure 6 illustrates the network machine learning model in more detail in accordance with one embodiment of the present disclosure;
Figure 7 illustrates one embodiment of a neural network forming the network ML model;
Figure 8 illustrate one example embodiment of the auto-encoder of Figure 7;
Figure 9 illustrates another embodiment of the network ML model;
Figure 10 illustrates the operation of the system of Figure 3 during a training phase in accordance with one embodiment of the present disclosure;
Figure 11 through 13 are schematic block diagrams of example embodiments of the server of Figure 3;
Figures 14 and 15 are schematic block diagrams of example embodiments of the client device of Figure 3; and
Figure 16 illustrates one example of a cellular communications system in which embodiments of the present disclosure may be implemented.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure. Like numbers refer to like elements throughout the detailed description.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular Radio Access Network (RAN)). Some examples of a wireless communication device include, but are not limited to: a User Equipment device (UE) in a Third Generation Partnership Project (3GPP) network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Radio Node:** As used herein, a "radio node" is either a radio access node or a wireless communication device.

**Cellular Network Node:** As used herein, a "cellular network node" is any node that is either part of the RAN or the core network of a cellular communications network/system (i.e., either a radio access node or a core network node).

**Client Device:** As used herein, a "client device" refers to any device intended for accessing services via an access network (e.g., a wired or wireless access network, a Radio Access Network (RAN) of a cellular communications network, or the like) and configured to communicate over the access network. For instance, the client device may be, but is not limited to, a communication device such as, e.g., a wireless communication device. A client device is also referred to herein as a "client computing device."

**Server:** As used herein, a "server" or "server device" refers to equipment capable, configured, arranged, and/or operable to communicate directly or indirectly with a client device via an access network. As server is also referred to herein as a "server device" or "server computing device."

Systems and methods are disclosed herein that provide enhanced feedback in a cascaded federated machine learning system. As discussed below in detail, rather than providing a value(s) of an output parameter(s) of a network machine learning (ML) model as feedback to client devices, a server provides feedback about a hidden layer (i.e., a hidden neural network layer) in the network ML model. In one embodiment, the network ML model is a neural network that includes a modified auto-encoder and a decoder that outputs a value(s) for an output parameter(s) of the network ML model based on the output of the modified auto-encoder. The modified auto-encoder is trained based on an output of the decoder which represents an output of the network ML model, rather than based on an output of a decoder that attempts to recreate the input signal of the auto-encoder as is done for a conventional auto-decoder. In this embodiment, the hidden layer for which the feedback is provided to the client device is a hidden layer within the modified auto-encoder (e.g., a hidden layer that has a minimum number of neurons or a hidden layer that corresponds to an output of the modified auto-encoder). In another embodiment, the network ML model includes a Principal Component Analysis (PCA) agent and a decoder, where the decoder is implemented as a neural network. The hidden layer for which the feedback is provided to the client device is a hidden layer within the neural network (e.g., a hidden layer of the neural network that receives, as its input, an output of the PCA agent).

In some embodiment, quantization is applied to both the feedback and the local ML models to reduce the footprint on the network (i.e., to reduce the amount of information that is exchanged between the server and the client devices).

While not being limited to or by any particular advantage, some example advantages that may be provided by embodiments of the present disclosure are as follows. Embodiments disclosed herein may reduce the network footprint, in term of transferred data volume of the feedback and the local ML models to be aggregated at the server. Embodiments disclosed herein may improve ML model training at the client devices (e.g., feedback from the server to the client devices should improve training performance at the client devices). In other words, embodiments of the present disclosure manage to select nearly optimal feedback from the server to the client devices. Embodiments disclosed herein are automated, i.e., there is no need for an expert to select which feature to select as feedback. Embodiments of the present disclosure may also provide an advantage in that the feedback from the server to the client devices is already denoised, i.e., feedback of the information about the hidden layer of the modified auto-encoder or PCA agent results in denoising of the input information to the network ML model at the server prior to feedback to the client devices. Embodiments disclosed herein maintain privacy of the global/network data, assuming that the client devices are not in a position to reconstruct ground truth from the feedback due to lack of information about the normalization of the received distribution.

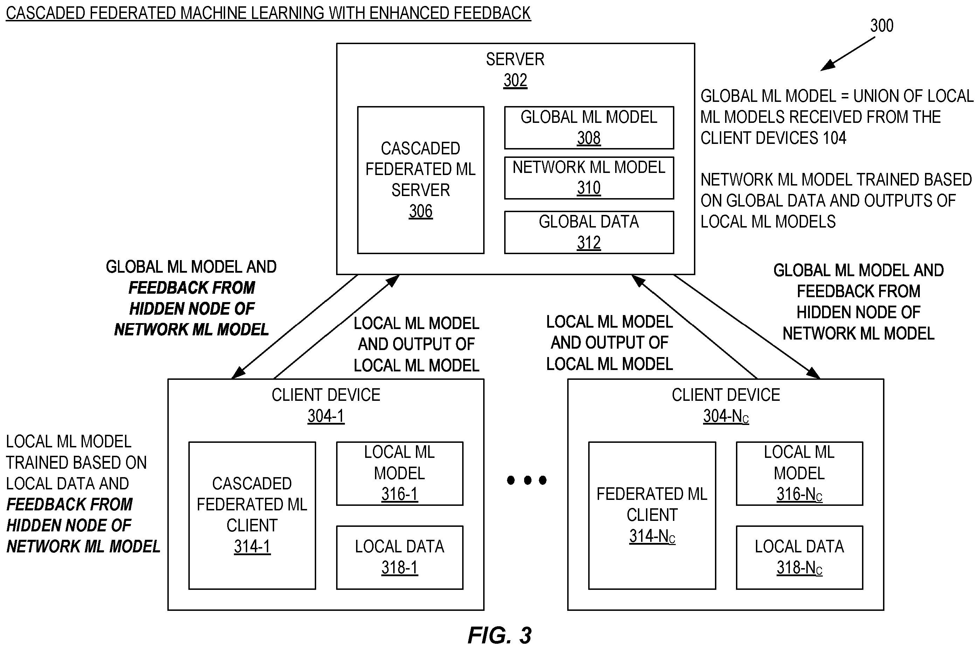

In this regard, Figure 3 illustrates a system 300 that implements a cascaded federated machine learning framework with enhanced feedback in accordance with one example embodiment of the present disclosure. As illustrated, the system 300 includes a server 302 and multiple client devices 304-1 through 304-$N_D$, which are generally referred to herein collectively as client devices 304 and individually as a client device 304. The server 302 includes a cascaded federated ML server function 306 that operates to generate a global ML model 308 and to train and use a network ML model 310 in accordance with the cascaded federated machine learning framework with enhanced feedback as disclosed herein. The server 302 has access to global data 312. The global data 312 is generally data available at the server 302 such as, e.g., measurements collected at the server 302 and/or network-related information. Each client device 304 includes a cascaded federated ML client function 314 that operates to train and use a local ML model 316. The client device 304 has access to local data 318. The local data 318 is generally data that is available at the client device 304 such as, for example, measurements performed by the client device 304 and/or other data stored at the client device 304.

As discussed below, the cascaded federated server function 306 at the server 302 generates the global ML model 308 by aggregating the local ML models 316 received from the client devices 304. The cascaded federated server function 306 trains the network ML model 310 to output a value(s) of a parameter(s) based on the global data 312 and values of the output parameter(s) of the local ML models 316 that are also received from the client devices 304. The cascaded federated client function 314 at each client device 304 operates to train the local ML model 316 to output a value(s) for a parameter(s) related to the operation of the client devices 304 based on the local data 318 and feedback information from the server 302. For example, for embodiments in which the system 300 is a cellular communications system, the parameter(s) output by the local ML model 316 may include a parameter(s) related to the operation of the client device 304, which is in this case a wireless communication device, in the cellular communications system such as, for example, Hybrid Automatic Repeat Request (HARQ) throughput of the wireless communication device. Note that the parameter(s) output by the network ML model 310 may be the same parameter(s) output by the local ML models 316 or some different parameter(s). For example, they may both be wireless communication device HARQ throughput.

Importantly, as compared to the cascaded federated machine learning framework disclosed in the above-referenced non-published internal reference, each cascaded federated machine learning client function 314 operates to train the respective local ML model 316 based on the local data 318 available at the client device 304 and feedback information from the server 302 about a hidden layer in the network ML model 310 rather than feedback of a value(s) of the output parameter(s) of the network ML model 310. The feedback about the hidden layer in the network ML model 310 may be, for example, a value(s) output by neuron(s) in the hidden layer in the network ML model 310.

During training, for a particular training epoch, the cascaded federated ML client function 314 at each client device 304 operates to train the local ML model 316 based on the local data 318 and, if available, feedback from the server 302 about a hidden layer of the network ML model 310. The training of the local ML model 316 at each client device 304 for the training epoch can be performed in accordance with any machine learning training mechanism. For example, the local ML model 316, as well as the global ML model 308, may be a neural network, and training the local ML model 316 is done using any machine learning algorithm that is suitable for a neural network such as, for example, mini-batch stochastic gradient descent, deep learning, etc. One of ordinary skill in the art will appreciate that there are many different types of ML models and training procedures that can be used. The cascaded federated ML client function 314 sends, to the server 302, the local ML model 316 as trained during this training epoch and a value(s) of the parameter(s) output by the local ML model 316 in response to data (i.e., input features) provided to the local ML model 316 for the training epoch. Note that the cascaded federated ML client function 314 may send the local ML model 316 to the server 302 by sending information needed by the server 302 to build the local ML model 316 (e.g., weights for all neurons in a neural network forming the local ML model 316) or by sending an update (e.g., information that contains only the changed weights of the neurons in the neural network forming the local ML model 316) that reflects only changes to the local ML model 316 relative to a prior version of the local ML model 316 sent by the cascaded federated ML client function 314 for the previous training epoch.

At the server 302, the cascaded federated ML server function 306 aggregates the local ML models 316 received from the client devices 304 to provide the global ML model 308. The details of the aggregation depend on the type of ML model used for the local ML models 316 and the global ML model 308. In general, for each (trainable) parameter of the global ML model 308, the parameter is an aggregation of respective parameters of the local ML models 316. For example, in one example embodiment, the local ML models 316 and the global ML model 308 are neural networks having the same neural network structure (i.e., the same arrangement of interconnected neurons). Each neuron has a number of inputs, weights (which are the trainable parameters) for the respective inputs, and an activation function that provides the output of the neurons based on the weighted inputs. In this example embodiment, the aggregation is performed by, for each weight of each neuron in the global ML model 308, computing the weight for that neuron in the global ML model 308 as the average (or some other combination such as, e.g., weighted average, median, etc.) of the weights of that neuron in the local ML models 316. Again, it should be noted that the manner in which aggregation is performed can vary depending on the type of ML model used.

In addition, the cascaded federated ML server function 306 trains the network ML model 310 based on the global data 312 and the values of the output parameter(s) of the local ML models 316 received from the client devices 304. The training of the I network ML model 310 for the training epoch can be performed in accordance with any machine learning training mechanism. For example, the network ML model 310 may be a neural network, and training the network ML model 310 is done using any machine learning algorithm that is suitable for a neural network such as, for example, mini-batch stochastic gradient descent, deep learning, etc. One of ordinary skill in the art will appreciate that there are many different types of ML models and training procedures that can be used.

The cascaded federated ML server function 306 provides the global ML model 308 and the feedback information to the client devices 304. The global ML model 308 may be sent by sending information that (e.g., neuron weights in the case of a neural network) that characterizes the global ML model 308 or an update that reflects changes to the global ML model 308 relative to, e.g., the previous version of the global ML model 308 sent or the local ML model 312 sent by that particular client device 304. Again, the feedback information is information about a hidden layer in the network ML model 210. This feedback information may be, for example, an output value(s) output by the hidden layer of the network ML model 210 in response to the data (i.e., the global data 312 and the value(s) of the output parameter(s) of the local ML models 316 received from the client devices 304) input to the network ML model 310 for the training epoch.

The client devices 304 then update their local ML models 316 based on the received global ML model 308 (e.g., the global ML 308 is stored as the new local ML models 316). In one embodiment, this is done by storing the received global ML model 308 as the local ML model 316 at each fo the client devices 304. For the next training epoch, the cascaded federated ML client function 314 at each client device 304 then performs training of its (new) local ML model 316 based on its local data 318 and the feedback information received from the server 302 and sends the resulting local ML model 316 (or an update relative to the last version of the local ML model 316 sent) and value(s) of the output parameter(s) of the local ML model 316 for this training epoch to the server 302. The training process continues in this manner until some predefined stopping criteria is reached. The stopping criteria may be, for example, reaching a predefined maximum number of training epochs, reaching a desired performance criterion (e.g., accuracy is greater than a predefined threshold), or the like.

Note that a "training epoch" a period of time over which the training process has made one pass through a batch or mini-batch of the training dataset. In regard to the cascaded federated machine learning framework disclosed herein, a training epoch is the period of time over which the training process has made one pass through the training dataset for both the local ML models 316 and the network ML model 310.

The system 300 may be any type of system. In one example embodiment, the system 300 is a cellular communications system (e.g., a 3GPP cellular communications system such as, e.g., a 5GS or EPS) in which the server 302 is a cellular network node (e.g., a radio access node such as, e.g., a base station) and the client devices 304 are wireless communication devices (e.g., UEs). As such, in the discussion below, some examples are given that are applicable to such an embodiment. In this context, in one embodiment, the output parameter of the network ML model 310 is a cellular network related parameter or a parameter related to the operation of the client devices 304 (as UEs) in a cellular network such as, e.g., UE HARQ throughput, Reference Signal Received Quality (RSRQ), precoding matrix, beamforming weights, cell throughput, or end-to-end delay (HARQ delay, PDCP delay, etc.). In one embodiment, the global data 312 used to train the network ML model 310 is data available to the cellular network node such as, e.g., UE identity (ID), cell ID, base station ID, cell ID, type of traffic, time of day (also referred to herein as period of the day), cell uplink throughput, cell downlink throughput, traffic type is video (i.e., a value that indicates whether or not the traffic is of the video type), cell location, or any combination of two or more of these parameters. Further, in one embodiment, the output parameter of the local ML model 316 is the same as the network parameter of the network ML model 310 (e.g., UE HARQ throughput), but it not limited thereto. In one embodiment, the local data 318 used to train the local ML model 316 includes data available to the wireless communication device such as, e.g., UE ID, cell ID, base station ID, carrier frequency, type of traffic, period of the day, traffic is video type, UE location (e.g., location of the UE, e.g., in terms of latitude, longitude, and altitude), or any combination of two or more of these parameters.

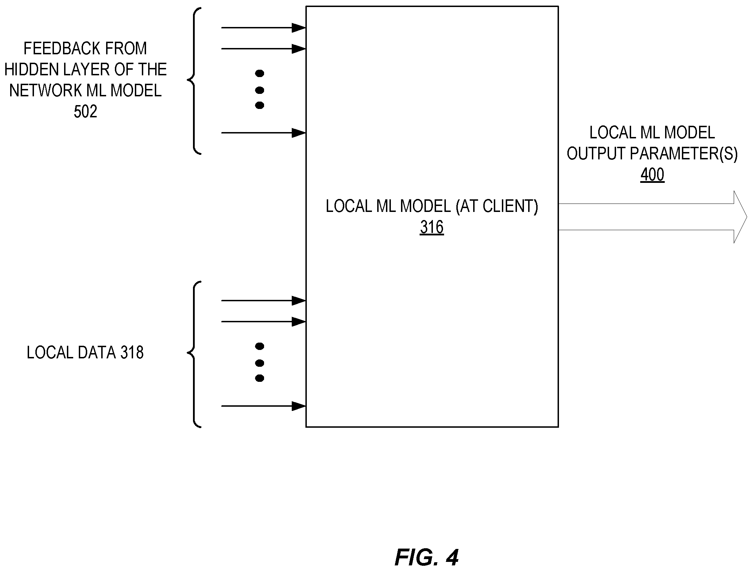

Figure 4 illustrates an example of the local ML model 316 of the client device 304 in accordance with an embodiment of the present disclosure. Input features of the local ML model 316 include the feedback about the hidden layer of the network ML model 310 received from the server 302 and the local data 318. The local ML model 316 outputs a value(s) for the output parameter(s) of the local ML model 316. Again, while the output parameter(s) may be any desired parameter(s), in one example, the output parameter(s) are wireless communication device (e.g., UE) HARQ throughput.

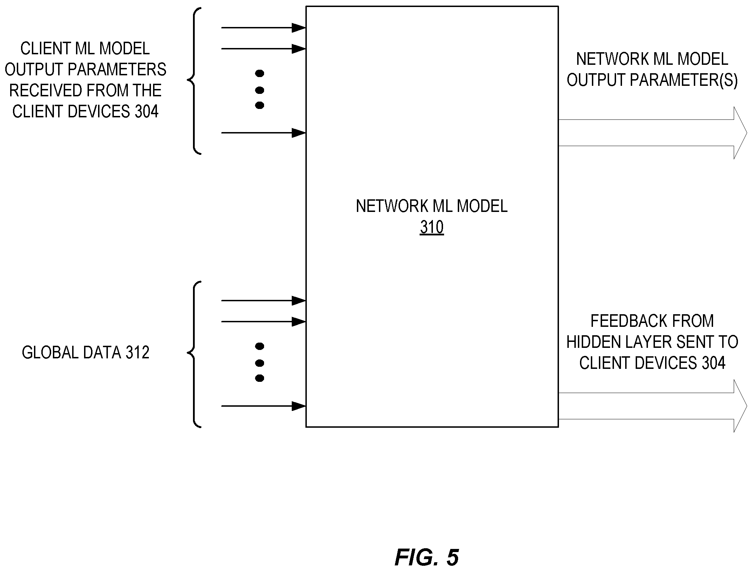

Figure 5 illustrates an example of the network ML model 310 in accordance with an embodiment of the present disclosure. Input features of the network ML model 310 include, in this example, the values of the output parameters of the local ML models 316 received from the client devices 304 and the global data 312. The network ML model 310 outputs a value(s) for the output parameter(s) of the network ML model 310. Again, while the output parameter(s) may be any desired parameter(s), in one example, the output parameter(s) are wireless communication device (e.g., UE) HARQ throughput.

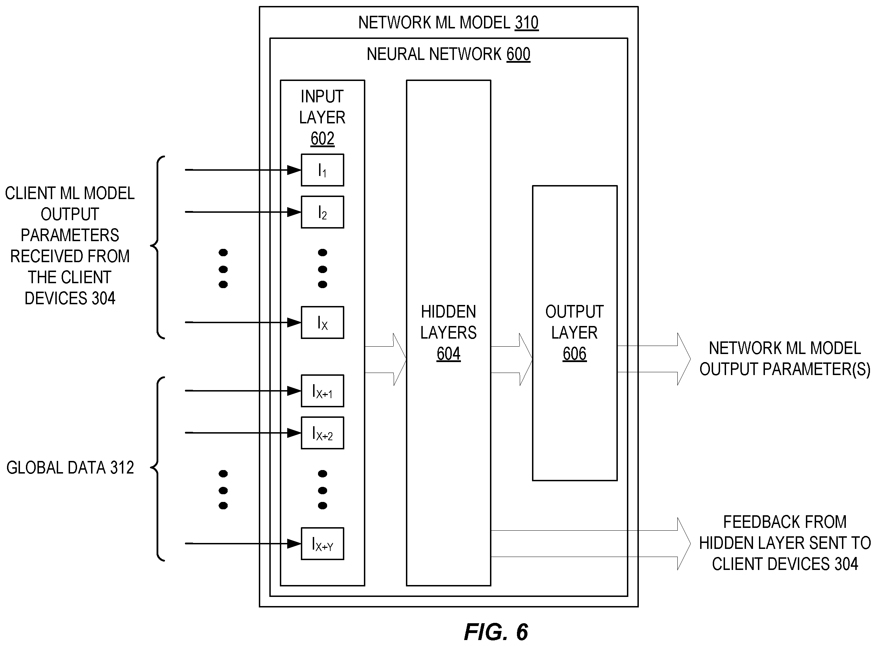

Figure 6 illustrates the network ML model 310 in more detail in accordance with one embodiment of the present disclosure. In this embodiment, the network ML model 310 is a neural network 600 that includes multiple neural network layers, which are also referred to herein as "layers." More specifically, the neural network 600 includes an input layer 602, one or more hidden layers 604, and an output layer 606. The input layer 602 includes multiple neurons that corresponds to respective input features, which are denoted as $I_1$ to $I_X$ (input features corresponding to the values of output parameters of the local ML models 316) and $I_{X+1}$ to $I_{X+Y}$ (input features corresponding to the local data 318). As shown in Figure 6, the feedback information provided to the client devices 304 for training of the local ML models 316 is information about one of the hidden layers 604 (e.g., the output value(s) of the neuron(s) in that hidden layer). In one embodiment, the hidden layer for which the feedback information is provided is the hidden layer from among the hidden layers 604 that has the minimum number of neurons (i.e., the hidden layer having the smallest number of neurons from among the hidden layers 604). In one embodiment, the hidden layer for which the feedback information is provided has a single neuron. However, this is only an example. The number of neurons in the hidden layer for which the feedback information is provided may alternatively have more than one neuron.

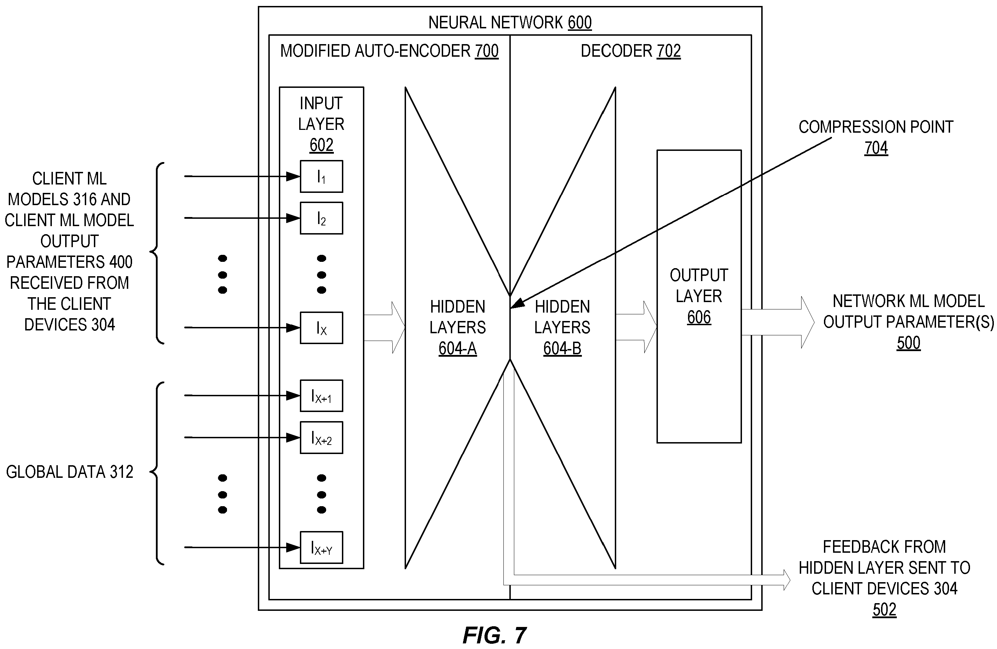

Figure 7 illustrates one embodiment of the neural network 600 forming the network ML model 310. In this embodiment, the neural network 600 includes a modified auto-encoder 700 and a decoder 702. The modified auto-encoder 700 is formed by the input layer 602 and a first subset of the hidden layers 604, which is denoted in Figure 7 as first hidden layers 604A. The decoder 702 is formed by a second subset of the hidden layers 604, which is denoted in Figure 7 as second hidden layers 604B, and the output layer 606. The hidden layer adjoining the modified auto-encoder 700 and the decoder 702 is referred to herein as a compression point 704. The compression point 704 is more specifically a last hidden layer from among the first hidden layers 604A as data propagates from the input layer 602 towards the decoder 702. This compression point 704 is the hidden layer having the least number of neurons from among the hidden layers 604 in the neural network 600. In operation, the modified auto-encoder 700 encodes, or compresses, the input features of the network ML model 310 to provide an encoded output, which is a denoised and compressed version of the input features of the network ML model 310.

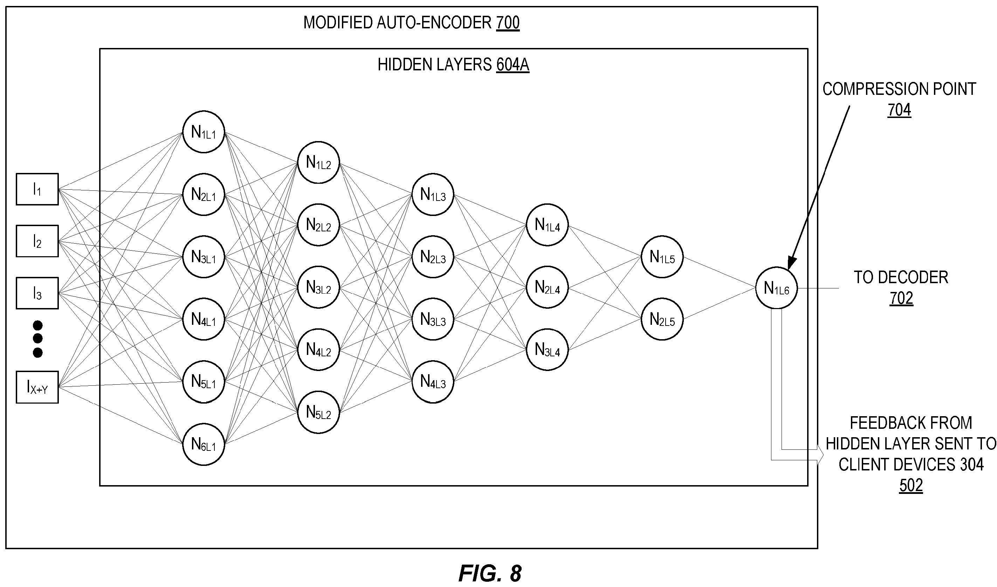

One example of the modified auto-encoder 700 is illustrated in Figure 8. As illustrated, in this example, the first hidden layers 604A in the modified auto-encoder 700 includes six hidden layers, which are denoted as hidden layers L1-L6. In this example, the first hidden layer L1 includes six neurons denoted as neurons $N_{1L1}$-$N_{6L1}$, the second hidden layer L2 includes five neurons denoted as neurons $N_{1L2}$-$N_{5L2}$, the third hidden layer L3 includes four neurons denoted as neurons $N_{1L3}$-$N_{6L3}$, the fourth hidden layer L4 includes three neurons denoted as neurons $N_{1L4}$-$N_{3L4}$, the fifth hidden layer L5 includes two neurons denoted as neurons $N_{1L5}$-$N_{2L5}$, and the sixth hidden layer L6 includes one neuron denoted as neuron $N_{1L6}$. In this example, the sixth hidden layer L6 is the compression point 704, and the feedback provided to the client devices 304 for training the local ML models 316 is feedback regarding the hidden layer L6 (e.g., the value(s) of the output(s) of the hidden layer L6).

As will be appreciated by those of ordinary skill in the art of machine learning a neural networks, the output (y) of a neuron can be defined as:

$$y = f\left(\sum_{i=1}^{n} w_i x_i + b\right)$$

where "i" in an index of the "n" inputs of the neuron, $x_i$ is the i-th input of the neuron, $w_i$ is the weight assigned to the i-th input $x_i$, and the function $f(\ )$ is a predefined activation function for the neuron. During training, the weights are adapted. In one embodiment, the weights of each neuron (e.g., each neuron in the neural network 600) are quantized. In one embodiment, a Last Value Quantizer is used for quantizing weights. In one embodiment, the output of the activation function of each neuron is quantized. In one embodiment, the output of each neuron is quantized using a Moving Average Quantizer. When such quantization is used and the feedback information provided from the server 302 to the client devices 304 is the output(s) of the neuron(s) in a hidden layer of the neural network 600 as described herein, then the feedback information is also quantized. This quantization, in addition to the compression provided by the modified auto-encoder 700, results in a small network footprint in terms of the amount of data and signaling needed to provide this feedback to the client devices 304.

It should be noted that the modified auto-encoder 700 is "modified" as compared to a conventional auto-encoder. As will be understood by one of ordinary skill in the art, a conventional auto-encoder receives an input signal and outputs an encoded, or compressed, representation of the input signal. This encoded representation of the input signal is then passed through a decoder to provide an output signal. The conventional auto-encoder is trained to minimize the error between the output signal and the input signal. In other words, the conventional auto-encoder is trained based on the output signal of the decoder, where the output signal of the decoder is to match the input signal of the conventional auto-encoder. In contrast, the modified auto-encoder 700 and the decoder 702 are not trained to provide an output signal that matches an input signal. Rather, the modified auto-encoder 700 and the decoder 702 are trained such that the network ML model 310 accurately predicts, or estimates, the value(s) of the output parameter(s) of the network ML model 310 (e.g., wireless device HARQ throughput) for given values of the input features at the input layer 602 (e.g., for given wireless communication device identity, cell identity, cell load, wireless communication device location, etc.). In this manner, the modified auto-encoder 700 provides an automated low-footprint feedback in the cascaded federated machine learning framework.

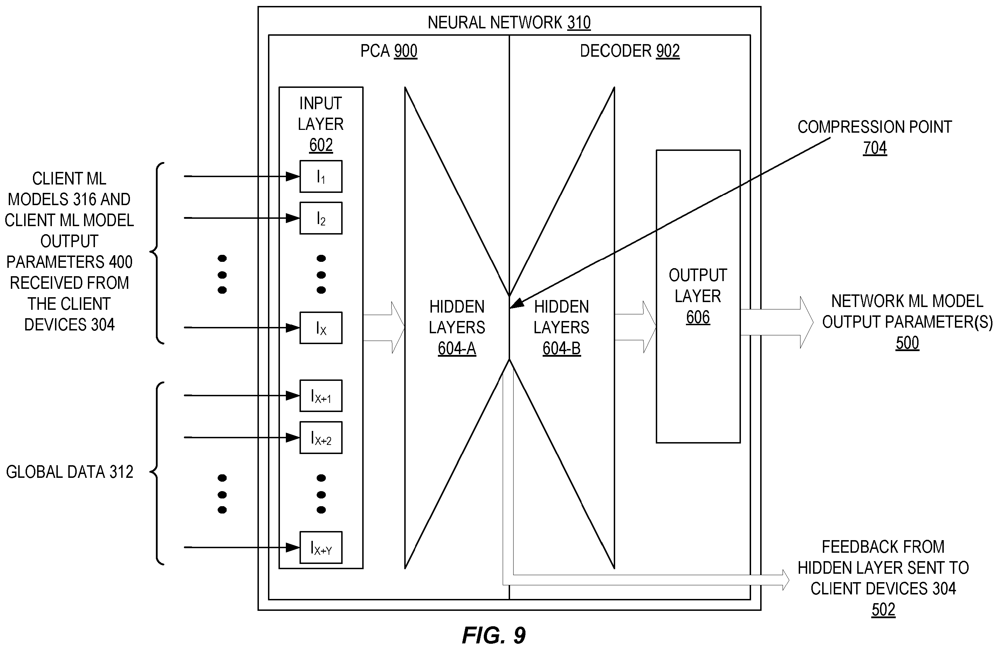

Figure 9 illustrates another embodiment of the network ML model 310. In this embodiment, the network ML model 310 includes a PCA agent 900 and a decoder 902. In general, the PCA agent 900 uses PCA to compress and denoise the data representing the input features of the network ML model 310. The output of the PCA agent 900 is provided to the decoder 902. In one embodiment, the decoder 902 is a neural network. The decoder 902 is trained such that the decoder 902 provides the desired output based on the compressed input features output by the PCA agent 900. The feedback provided to the client devices 302 is, in one example, feedback regarding the hidden input layer of the neural network forming the decoder 902 (e.g., feedback regarding the compressed input features output by the PcA agent 900). The dimension of the PCA output is similar to that of the modified auto-encoder compression point 704 (compression hidden layer number of neurons). Alternatively, in the PCA case, the wanted variance (i.e. 0.95) can be used to calibrate the PCA agent 900.

It should be noted that while the modified auto-encoder 700 and the PCA agent 900 are disclosed herein as functions or schemes used to compress the input features of the network ML model 310, the present disclosure is not limited to the modified auto-encoder 700 and the PCA agent 900. Others statistical or ML dimensionality reduction techniques can alternatively be used. It should also be noted that the modified auto-encoder 700 and the PCA agent 900 (or alternative statistical or ML dimensionality reduction technique) provides automated selection of a combination of the input features of the network ML model 310 to feed back to the client devices 304 in the form of the compressed data from the hidden layer. As such, manual selection of what input features to feed back to the client devices 304 by an expert is not needed.

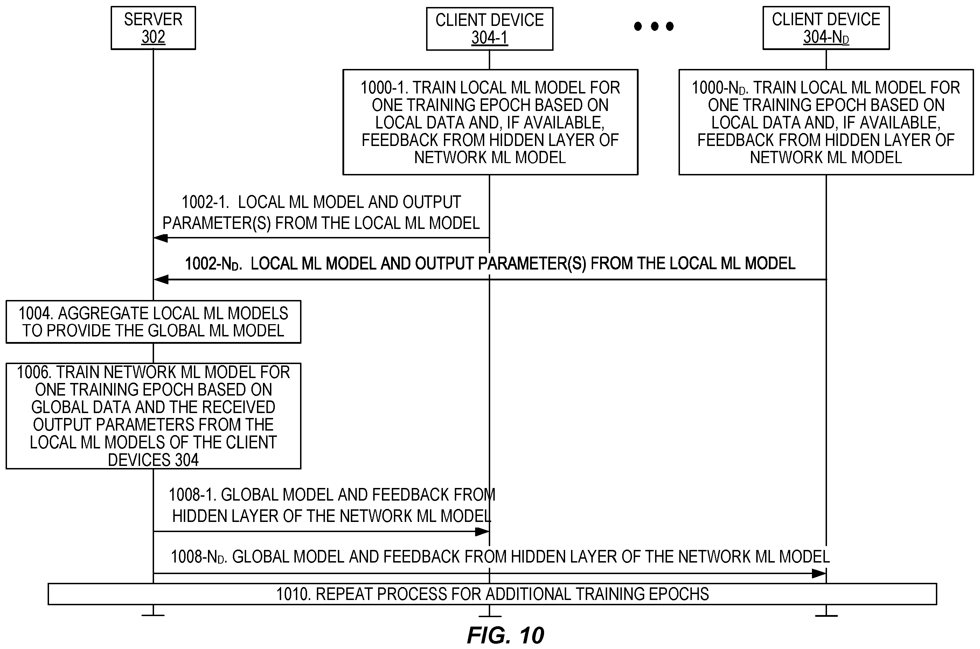

Figure 10 illustrates the operation of the system 300 during a training phase in accordance with one embodiment of the present disclosure. As illustrated, the client devices 304-1 through 304-$N_D$, and in particular the cascaded federated machine learning client functions 314-1 through 314-$N_D$, train their respective local ML models 316-1 through 316-$N_D$ for a training epoch based on their local data 318-1 through 318-$N_D$ and, if available, feedback information from the server 302 about a hidden layer of the network ML model 310, as described above (steps 1000-1 through 1000-$N_D$). The client devices 304-1 through 304-$N_D$, and in particular the cascaded federated machine learning client functions 314-1 through 314-$N_D$, send their respective local ML models 316 for the training epoch and a value(s) of the output parameter(s) of their respective local ML models 316 for the training epoch to the server 302 (steps 1002-1 through 1002-$N_D$). Note that the value(s) of the output parameter(s) of the local ML model 316 of each client device 304 for the training epoch is the value(s) of the output parameter(s) output by the local ML model 316 responsive to the local data 318 and, if available, the feedback information received from the server 302 being input into the local ML model 316 for the training epoch.

At the server 302, the server 302, and more specifically the cascaded federated machine learning server function 306, aggregates the local ML models 316-1 through 316-$N_D$ for the training epoch to provide the global ML model 308 for the training epoch (step 1004). The server 302, and more specifically the cascaded federated machine learning server function 306, also trains the network ML model 310 for the training epoch based on the global data 312 and the values of the output parameters of the local ML models 316-1 through 316-$N_D$ received from the client devices 304 (step 1006). The server 302, and more specifically the cascaded federated machine learning server function 306, sends the global ML model 308 and a value(s) of the output parameter(s) of the network ML model 310 for the training epoch to the client devices 304-1 through 304-$N_D$ (steps 1008-1 through 1008-$N_D$). The value(s) of the output parameter(s) of the network ML model 310 of the training epoch is the value(s) of the output parameter(s) output by the network ML model 310 responsive to the global data 308 and the value(s) of the output parameter(s) of the local ML models 316 received from the client devices 304.

The training process is then repeated for multiple training epochs, e.g., until a predefined stopping criterion is satisfied (step 1010). The stopping criterion may be, for example, a predefined maximum number of training epochs or reach a predefined performance or accuracy level for the local ML models 316.

While not illustrated in the process of Figure 10, it should be noted that the global data 312 may be preprocessed prior to being input into the network ML model 310 for training in step 1006. Likewise, the local data 318 may be preprocessed prior to being input into the local ML model 316 in step 1000. Such preprocessing is well-known to those of ordinary skill in the art of machine learning. This preprocessing may include, for example:

- obtaining real channel gains and phases, e.g., based on London map,
- initiating client devices' traffic containing video where the traffic is periodic and in both uplink and downlink directions,
- resampling of the data,
- interpolation,
- UE/cell association across different dataframes,
- Skewing handling (e.g., Box-Cox and Yeo-Johnson algorithms), and
- filtering all the results of the simulation or actual deployment to obtain input features of both client devices (UEs) and server(s) (gNB(s) or cell(s)), where examples of such input features are provided herein.

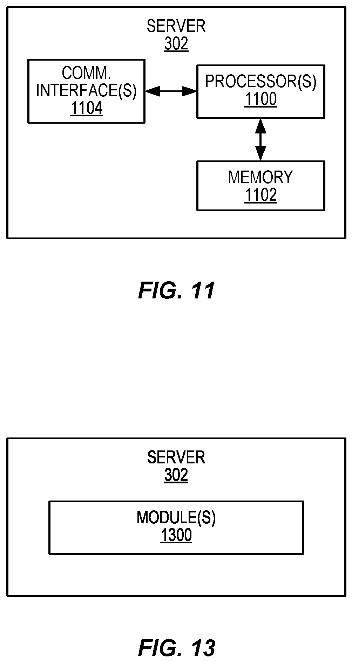

Figure 11 is a schematic block diagram of the server 302 according to some embodiments of the present disclosure. Optional features are represented by dashed boxes. As illustrated, the server 302 includes one or more processors 1100 (e.g., Central Processing Units (CPUs), Application Specific Integrated Circuits (ASICs), Field Programmable Gate Arrays (FPGAs), and/or the like), memory 1102, and one or more communication interfaces 1104. The one or more processors 1100 are also referred to herein as processing circuitry. The communication interface(s) 1104 include, in some embodiments, a wireless communication interface (e.g., a cellular radio interface including one or more radio units each including one or more transmitters and one or more receivers) and/or a wired communication interfaces (e.g., an Ethernet network interface). The one or more processors 1104 operate to provide one or more functions of the server 302 as described herein. In some embodiments, the function(s) are implemented in software that is stored, e.g., in the memory 1102 and executed by the one or more processors 1100.

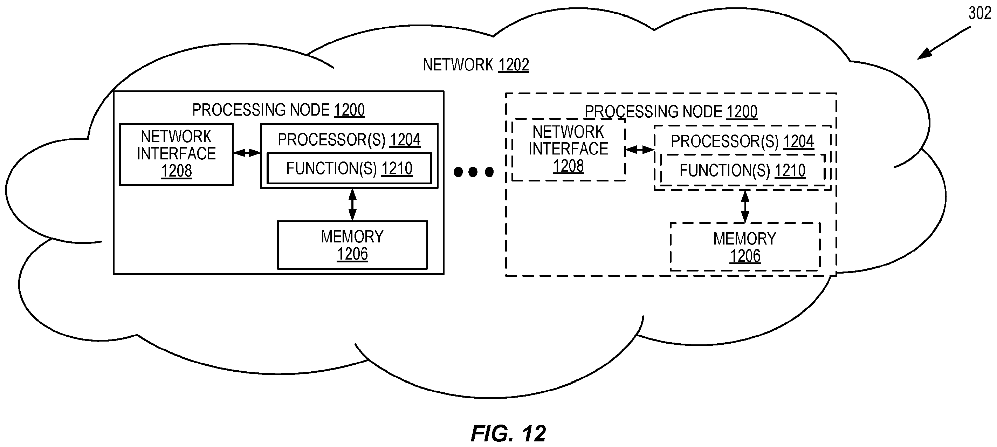

Figure 12 is a schematic block diagram that illustrates a virtualized embodiment of the server 302 according to some embodiments of the present disclosure. Again, optional features are represented by dashed boxes. As used herein, a "virtualized" server is an implementation of the server 302 in which at least a portion of the functionality of the server 302 is implemented as a virtual component(s) (e.g., via a virtual machine(s) executing on a physical processing node(s) in a network(s)). As illustrated, in this example, the server 302 includes one or more processing nodes 1200 coupled to or included as part of a network(s) 1202. If present, the control system 1102 or the radio unit(s) are connected to the processing node(s) 1200 via the network 1202. Each processing node 1200 includes one or more processors 1204 (e.g., CPUs, ASICs, FPGAs, and/or the like), memory 1206, and a network interface 1208.

In this example, functions 1210 of the serer 302 described herein are implemented at the one or more processing nodes 1200 or distributed across the two or more of the processing nodes 1200 in any desired manner. In some particular embodiments, some or all of the functions 1210 of the server 302 described herein are implemented as virtual components executed by one or more virtual machines implemented in a virtual environment(s) hosted by the processing node(s) 1200.

In some embodiments, a computer program including instructions which, when executed by at least one processor, causes the at least one processor to carry out the functionality of the server 302 or a node (e.g., a processing node 1200) implementing one or more of the functions 1210 of the server 302 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 13 is a schematic block diagram of the server 302 according to some other embodiments of the present disclosure. The server 302 includes one or more modules 1300, each of which is implemented in software. The module(s) 1300 provide the functionality of the server 302 described herein. For example, the modules 1300 may include separate modules for each step performed by the server 302 in Figure 10 (e.g., a receiving module that performs the functions of the server 304 with respect to steps 1002-1 through 1002-$N_D$, an aggregating module that performs the functions of the server 304 with respect to the step 1004, a training module that performs the functions of the server 304 with respect to step 1006, and a transmitting module the performs the functions of the server 304 with respect to step 1006-1 through 1006-$N_D$). This discussion is equally applicable to the processing node 1200 of Figure 12 where the modules 1300 may be implemented at one of the processing nodes 1200 or distributed across multiple processing nodes 1200 and/or distributed across the processing node(s) 1200 and the control system 1102.

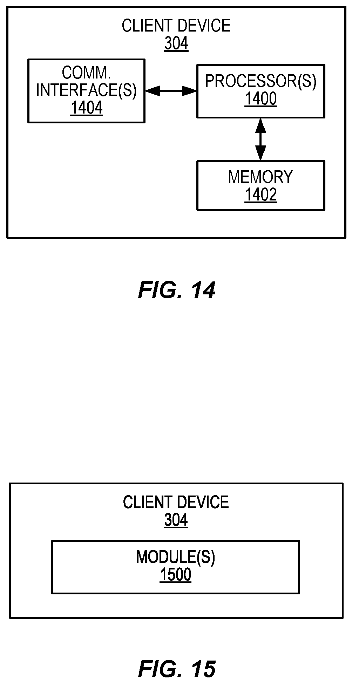

Figure 14 is a schematic block diagram of the client device 304 according to some embodiments of the present disclosure. Optional features are represented by dashed boxes. As illustrated, the client device 304 includes one or more processors 1400 (e.g., Central Processing Units (CPUs), Application Specific Integrated Circuits (ASICs), Field Programmable Gate Arrays (FPGAs), and/or the like), memory 1402, and one or more communication interfaces 1404. The one or more processors 1400 are also referred to herein as processing circuitry. The communication interface(s) 1404 include, in some embodiments, a wireless communication interface (e.g., a cellular radio interface including one or more radio units each including one or more transmitters and one or more receivers) and/or a wired communication interfaces (e.g., an Ethernet network interface). The one or more processors 1404 operate to provide one or more functions of the client device 304 as described herein. In some embodiments, the function(s) are implemented in software that is stored, e.g., in the memory 1402 and executed by the one or more processors 1400.

In some embodiments, a computer program including instructions which, when executed by at least one processor, causes the at least one processor to carry out the functionality of the client device 304 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 15 is a schematic block diagram of the client device 304 according to some other embodiments of the present disclosure. The client device 304 includes one or more modules 1500, each of which is implemented in software. The module(s) 1500 provide the functionality of the client device 304 described herein. For example, the modules 1500 may include separate modules for each step performed by the client device 304 in Figure 10 (e.g., a training module that performs the functions of the client device 304 with respect to step 1000, a transmitting module that performs the functions of the client device 304 with respect to the step 1002, and a receiving module the performs the functions of the client device 304 with respect to step 1006).

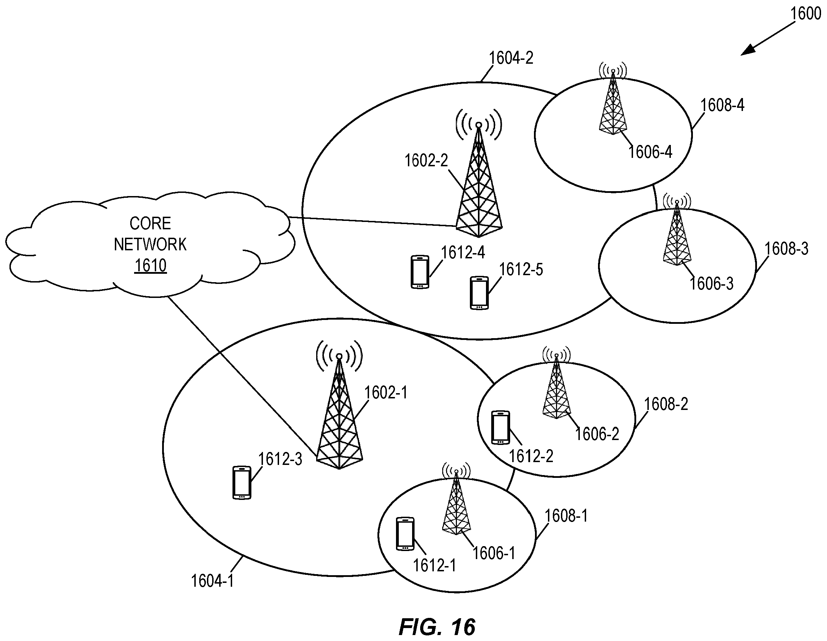

As discussed above, in one example embodiment, the system 300 of Figure 3 is implemented in a cellular communications system. In this regard, Figure 16 illustrates one example of a cellular communications system 1600 in which embodiments of the present disclosure may be implemented. The cellular communications system 1600 may be, for example, a 3GPP system such as, e.g., a 5G system (5GS) including a Next Generation RAN (NG-RAN) and a 5G Core (5GC) or an Evolved Packet System (EPS) including an Evolved Universal Terrestrial RAN (E-UTRAN) and a Evolved Packet Core (EPC). In this example, the RAN includes base stations 1602-1 and 1602-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 1604-1 and 1604-2. The base stations 1602-1 and 1602-2 are generally referred to herein collectively as base stations 1602 and individually as base station 1602. Likewise, the (macro) cells 1604-1 and 1604-2 are generally referred to herein collectively as (macro) cells 1604 and individually as (macro) cell 1604. The RAN may also include a number of low power nodes 1606-1 through 1606-4 controlling corresponding small cells 1608-1 through 1608-4. The low power nodes 1606-1 through 1606-4 can be small base stations (such as pico or femto base stations) or Remote Radio Heads (RRHs), or the like. Notably, while not illustrated, one or more of the small cells 1608-1 through 1608-4 may alternatively be provided by the base stations 1602. The low power nodes 1606-1 through 1606-4 are generally referred to herein collectively as low power nodes 1606 and individually as low power node 1606. Likewise, the small cells 1608-1 through 1608-4 are generally referred to herein collectively as small cells 1608 and individually as small cell 1608. The cellular communications system 1600 also includes a core network 1610, which in the 5G System (5GS) is referred to as the 5GC. The base stations 1602 (and optionally the low power nodes 1606) are connected to the core network 1610.

The base stations 1602 and the low power nodes 1606 provide service to wireless communication devices 1612-1 through 1612-5 in the corresponding cells 1604 and 1608. The wireless communication devices 1612-1 through 1612-5 are generally referred to herein collectively as wireless communication devices 1612 and individually as wireless communication device 1612. In the following description, the wireless communication devices 1612 are oftentimes UEs, but the present disclosure is not limited thereto.

In one example embodiment, the server 302 is or is implemented at a network node within the cellular communication system 1600 such as, for example, within a base station 1602, and the client devices 304 correspond to at least some of the wireless communication devices 1612.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • AF | Application Function |
| • AMF | Access and Mobility Function |
| • AN | Access Network |
| • AP | Access Point |
| • ASIC | Application Specific Integrated Circuit |
| • AUSF | Authentication Server Function |
| • CPU | Central Processing Unit |
| • DN | Data Network |
| • DSP | Digital Signal Processor |
| • eNB | Enhanced or Evolved Node B |
| • EPS | Evolved Packet System |
| • E-UTRA | Evolved Universal Terrestrial Radio Access |
| • FPGA | Field Programmable Gate Array |
| • gNB | New Radio Base Station |
| • gNB-DU | New Radio Base Station Distributed Unit |
| • HSS | Home Subscriber Server |
| • IoT | Internet of Things |
| • IP | Internet Protocol |
| • LTE | Long Term Evolution |
| • MME | Mobility Management Entity |
| • MTC | Machine Type Communication |
| • NEF | Network Exposure Function |
| • NF | Network Function |

(continued)

| | |
|---|---|
| • NR | New Radio |
| • NRF | Network Function Repository Function |
| • NSSF | Network Slice Selection Function |
| • OTT | Over-the-Top |
| • PC | Personal Computer |
| • PCF | Policy Control Function |
| • P-GW | Packet Data Network Gateway |
| • QoS | Quality of Service |
| • RAM | Random Access Memory |
| • RAN | Radio Access Network |
| • ROM | Read Only Memory |
| • RRH | Remote Radio Head |
| • RTT | Round Trip Time |
| • SCEF | Service Capability Exposure Function |
| • SMF | Session Management Function |
| • UDM | Unified Data Management |
| • UE | User Equipment |
| • UPF | User Plane Function |

## Claims

1. A computer-implemented method of operation of a server (302) for cascaded federated machine learning, the method comprising:

for a training epoch:

receiving (1002-1 through 1 002-$N_D$), from each client device (304) of a plurality of client devices (304-1 through 304-$N_D$):

a local machine learning, ML, model (316) for estimating one or more first parameters as trained at the client device (304) for the training epoch; and
an estimated value of each of the one or more first parameters output by the local ML model (316) at the client device (304) for the training epoch;

aggregating (1004) the local ML models (316-1 through 31 6-$N_D$) received from the plurality of client devices (304-1 through 304-$N_D$) to provide a global ML model (308) for estimating the one or more first parameters;
training (1006) a network ML model (310) based on:

the estimated values of each of the one or more parameters output by the local ML models (316) for the training epoch; and
global data (312) available at the server (302);
wherein the network ML model (310) comprises a neural network for estimating one or more second parameters; and

providing (1008-1 through 1 008-$N_D$), to each client device (304) of the plurality of client devices (304-1 through 304-$N_D$):

the global ML model (308); and
feedback information related to one of a plurality of hidden neural network layers of the neural network comprised in the network ML model (310) for training the local ML models (316) at the client device (304); and

repeating (1010) the receiving, aggregating, training, and providing for one or more additional training epochs.

2. The method of claim 1 wherein the one or more first parameters are the same as the one or more second parameters, or

wherein the one or more first parameters are different than the one or more second parameters.

3. The method of any of claims 1 or 2 wherein the plurality of client devices (304-1 through 304-$N_D$) are User Equipments, UEs, (1612) in a cellular communications system (1600), and the one or more first parameters comprise Hybrid Automatic Repeat Request, HARQ, throughput of the UEs (1612).

4. The method of any of claims 1 to 3 wherein the network ML model (310) is a neural network (600) that comprises:

a modified auto-encoder (700) comprising an input neural network layer (602) and a first subset (604-A) of the plurality of hidden layers (604), the modified auto-encoder (700) configured to compress data that represents a plurality of input features of the network ML model (310) to provide compressed data that represents the plurality of input features of the network ML model (310); and

a decoder (702) that comprises a second subset (604-B) of the plurality of hidden layers (604) and operates to provide the estimated value for each of the one or more second parameters based on the compressed data output by the modified auto-encoder (700).

5. The method of any of claims 1 to 3 wherein the network ML model (310) comprises:

a principal component analysis, RCA, function (900) configured to compress data that represents a plurality of input features of the network ML model (310) to provide compressed data that represents the plurality of input features of the network ML model (310) using RCA; and

a decoder (902) that is formed by the neural network and that operates to provide the estimated value for each of the one or more second parameters based on the compressed data output by the RCA function (900).

6. The method of claim 5 wherein the one of the plurality of hidden neural network layers to which the feedback information is related is a hidden neural network layer from among the plurality of hidden neural network layers that corresponds to an input of the decoder (902).

7. The method of any of claims 4 to 6 wherein the plurality of input features of the network ML model (310) comprise first input features based on the global data available to the server (302) and second input features based on the estimated values of each of the one or more first parameters received from the plurality of client devices (304-1 through 304-$N_D$).

8. The method of claim 7 wherein the plurality of client devices (304-1 through 304-$N_D$) are User Equipments, UEs, (1612) in a cellular communications system (1600), and the first input features comprise: (a) UE identity, (b) cell identity, (c) base station identity, (d) carrier identity, (e) type of traffic, (f) period of the day, (g) cell uplink throughput, (h) cell downlink throughput, (i) traffic is video type, 0) cell location, or (j) a combination of any two or more of (a)-(I).

9. The method of any of claims 1 to 8 wherein the plurality of client devices (304-1 through 304-$N_D$) are User Equipments, UEs, (1612) in a cellular communications system (1600), and the server (302) is a network node (1602) in the cellular communications system (1600).

10. A server (302) for cascaded federated machine learning, the server (302) adapted to:

for a training epoch:

receive (1002-1 through 1 002-$N_D$), from each client device (304) of a plurality of client devices (304-1 through 304-$N_D$):

a local machine learning, ML, model (316) for estimating one or more first parameters as trained at the client device (304) for the training epoch; and
an estimated value of each of the one or more first parameters output by the local ML model (316) at the client device (304) for the training epoch;

aggregate (1004) the local ML models (316-1 through 31 6-$N_D$) received from the plurality of client devices (304-1 through 304-$N_D$) to provide a global ML model (308) for estimating the one or more first parameters;
train (1006) a network ML model (310) based on:

the estimated values of each of the one or more parameters output by the local ML models (316) for the training epoch; and
global data (312) available at the server (302);
wherein the network ML model (310) comprises a neural network for estimating one or more second parameters; and

provide (1008-1 through 1 008-N$_D$), to each client device (304) of the plurality of client devices (304-1 through 304-N$_D$):

the global ML model (308); and
feedback information related to one of a plurality of hidden neural network layers of the neural network comprised in the network ML model (310) for training the local ML
models (316) at the client device (304); and

repeat (1010) the receiving, aggregating, training, and providing for one or more additional training epochs.

11. The server (302) of claim 10, wherein the server (302) is further adapted to perform the method of any of claims 2 to 9.

12. A computer-implemented method of operation of a client device (304) for cascaded federated machine learning, the method comprising:

for a training epoch:

training (1000) a local machine learning, ML, model (316) based on:

local data (318) available at the client device (304); and
feedback information received from a server (302), the feedback information related to one of a plurality of hidden neural network layers of a neural network comprised in a network ML model (310) trained at the server (302);
wherein local ML model (316) is for estimating one or more first parameters at the client device (304), and the network ML model (310) is for estimating one or more second parameters at the server (302);

providing (1002), to the server (302):

the local ML model (316) for the training epoch; and
an estimated value of each of the one or more first parameters output by the local ML model (316) at the client device (304) for the training epoch; and

performing iteratively the method for one or more additional training epochs:
receiving (1008) at the client device (304), a global ML model (308) that is an aggregation of local ML models (316-1 through 316-N$_D$) received from a plurality of client devices (304-1 through 304-N$_D$) including the local ML model (316) of the client device (304), updating (1009) the local ML model (316) based on the global ML model (308) and providing the updated local ML (316) model to the server (302), and receiving (1008) from the server (302), the feedback information related to the one of the plurality of hidden neural network layers of the neural network comprised in the network ML model (310).

13. The method of claim 12 wherein the one or more first parameters are the same as the one or more second parameters, or
wherein the one or more first parameters are different than the one or more second parameters.

14. The method of claim 12 wherein the plurality of client devices (304-1 through 304-N$_D$) are User Equipments, UEs, (1612) in a cellular communications system (1600), and the one or more first parameters comprise Hybrid Automatic Repeat Request, HARQ, throughput of the UEs (1612).

**Patentansprüche**

1. Computerimplementiertes Betriebsverfahren eines Servers (302) für kaskadiertes föderiertes maschinelles Lernen, wobei das Verfahren Folgendes umfasst:
für eine Trainingsepoche:
Empfangen (1002-1 bis 1002-$N_D$) von jeder Client-Vorrichtung (304) einer Vielzahl von Client-Vorrichtungen (304-1 bis 304-$N_D$) des Folgenden:

eines lokalen Modells (316) für maschinelles Lernen, ML, zum Schätzen von einem oder mehreren ersten Parametern wie an der Client-Vorrichtung (304) für die Trainingsepoche trainiert; und
eines geschätzten Werts jedes des einen oder der mehreren ersten Parameter, die durch das lokale ML-Modell (316) an der Client-Vorrichtung (304) für die Trainingsepoche ausgegeben werden;
Aggregieren (1004) der lokalen ML-Modelle (316-1 bis 316-$N_D$), die von der Vielzahl von Client-Vorrichtungen (304-1 bis 304-$N_D$) empfangen werden, um ein globales ML-Modell (308) zum Schätzen des einen oder der mehreren ersten Parameter bereitzustellen;
Trainieren (1006) eines Netzwerk-ML-Modells (310) basierend auf Folgendem:

den geschätzten Werten jedes des einen oder der mehreren Parameter, die durch die lokalen ML-Modelle (316) für die Trainingsepoche ausgegeben werden; und
globalen Daten (312), die an dem Server (302) zur Verfügung stehen;
wobei das Netzwerk-ML-Modell (310) ein neuronales Netzwerk zum Schätzen von einem oder mehreren zweiten Parametern umfasst; und
Bereitstellen (1008-1 bis 1008-$N_D$) an jede Client-Vorrichtung (304) der Vielzahl von Client-Vorrichtungen (304-1 bis 304-$N_D$) des Folgenden:

des globalen ML-Modells (308); und
Rückkopplungsinformationen in Bezug auf eine von einer Vielzahl von versteckten neuronalen Netzwerkschichten des neuronalen Netzwerks, die in dem Netzwerk-ML-Modell (310) umfasst ist, zum Trainieren der lokalen ML-Modelle (316) an der Client-Vorrichtung (304); und
Wiederholen (1010) des Empfangens, Aggregierens, Trainierens und Bereitstellens für eine oder mehrere zusätzliche Trainingsepochen.

2. Verfahren nach Anspruch 1, wobei der eine oder die mehreren ersten Parameter dieselben wie der eine oder die mehreren zweiten Parameter sind oder
wobei der eine oder die mehreren ersten Parameter sich von dem einen oder den mehreren zweiten Parametern unterscheiden.

3. Verfahren nach einem der Ansprüche 1 oder 2, wobei die Vielzahl von Client-Vorrichtungen (304-1 bis 304-$N_D$) Benutzergeräte, UEs, (1612) in einem zellulären Kommunikationssystem (1600) sind und der eine oder die mehreren ersten Parameter Hybrid-Automatic-Repeat-Request-Durchsatz, HARQ-Durchsatz, der UEs (1612) umfassen.

4. Verfahren nach einem der Ansprüche 1 bis 3, wobei das Netzwerk-ML-Modell (310) ein neuronales Netzwerk (600) ist, das Folgendes umfasst:

einen modifizierten Autoencoder (700), der eine Eingabeschicht (602) des neuronalen Netzwerks und eine erste Teilmenge (604-A) der Vielzahl von versteckten Schichten (604) umfasst, wobei der modifizierte Autoencoder (700) dazu konfiguriert ist, Daten, die eine Vielzahl von Eingabemerkmalen des Netzwerk-ML-Modells (310) darstellen, zu komprimieren, um komprimierte Daten bereitzustellen, welche die Vielzahl von Eingabemerkmalen des Netzwerk-ML-Modells (310) darstellen; und
einen Decoder (702), der eine zweite Teilmenge (604-B) der Vielzahl von versteckten Schichten (604) umfasst und betrieben wird, um den geschätzten Wert für jeden des einen oder der mehreren zweiten Parameter basierend auf der Ausgabe komprimierter Daten durch den modifizierten Autoencoder (700) bereitzustellen.

5. Verfahren nach einem der Ansprüche 1 bis 3, wobei das Netzwerk-ML-Modell (310) Folgendes umfasst:

eine Hauptkomponentenanalysefunktion, RCA-Funktion (900), die dazu konfiguriert ist, Daten, die eine Vielzahl von Eingabemerkmalen des Netzwerk-ML-Modells (310) darstellen, zu komprimieren, um komprimierte Daten bereitzustellen, welche die Vielzahl von Eingabemerkmalen des Netzwerk-ML-Modells (310) unter Verwendung von RCA darstellen; und
einen Decoder (902), der durch das neuronale Netzwerk gebildet ist und betrieben wird, um den geschätzten Wert für jeden des einen oder der mehreren zweiten Parameter basierend auf der Ausgabe komprimierter Daten durch die RCA-Funktion (900) bereitzustellen.

6.  Verfahren nach Anspruch 5, wobei die eine der Vielzahl von versteckten neuronalen Netzwerkschichten, auf die sich die Rückkopplungsinformationen beziehen, eine versteckte neuronale Netzwerkschicht aus der Vielzahl von versteckten neuronalen Netzwerkschichten ist, die einer Eingabe des Decoders (902) entspricht.

7.  Verfahren nach einem der Ansprüche 4 bis 6, wobei die Vielzahl von Eingabemerkmalen des Netzwerk-ML-Modells (310) erste Eingabemerkmale, die auf den globalen Daten, die dem Server (302) zur Verfügung stehen, basieren, und zweite Eingabemerkmale, die auf den geschätzten Werten jedes des einen oder der mehreren ersten Parameter, die von der Vielzahl von Client-Vorrichtungen (304-1 bis 304-$N_D$) empfangen werden, basieren, umfasst.

8.  Verfahren nach Anspruch 7, wobei es sich bei der Vielzahl von Client-Vorrichtungen (304-1 bis 304-$N_D$) um Benutzergeräte, UEs, (1612) in einem zellulären Kommunikationssystem (1600) handelt und die ersten Eingabemerkmale Folgendes umfassen: (a) UE-Identität, (b) Zellenidentität, (c) Basisstationsidentität, (d) Trägeridentität, (e) Verkehrstyp, (f) Tageszeit, (g) Zellen-Uplink-Durchsatz, (h) Zellen-Downlink-Durchsatz, (i) Verkehr ist vom Videotyp, 0) Zellenstandort oder (j) einer Kombination aus zwei oder mehr von (a)-(l).

9.  Verfahren nach einem der Ansprüche 1 bis 8, wobei es sich bei der Vielzahl von Client-Vorrichtungen (304-1 bis 304-$N_D$) um Benutzergeräte, UEs, (1612) in einem zellulären Kommunikationssystem (1600) handelt und der Server (302) ein Netzwerkknoten (1602) in dem zellulären Kommunikationssystem (1600) ist.

10. Server (302) für kaskadiertes föderiertes maschinelles Lernen, wobei der Server (302) für Folgendes ausgelegt ist:
    für eine Trainingsepoche:
    Empfangen (1002-1 bis 1002-$N_D$) von jeder Client-Vorrichtung (304) einer Vielzahl von Client-Vorrichtungen (304-1 bis 304-$N_D$) des Folgenden:

    > eines lokalen Modells (316) für maschinelles Lernen, ML, zum Schätzen von einem oder mehreren ersten Parametern wie an der Client-Vorrichtung (304) für die Trainingsepoche trainiert; und
    > eines geschätzten Werts jedes des einen oder der mehreren ersten Parameter, die durch das lokale ML-Modell (316) an der Client-Vorrichtung (304) für jede Trainingsepoche ausgegeben werden;
    > Aggregieren (1004) der lokalen ML-Modelle (316-1 bis 316-$N_D$), die von der Vielzahl von Client-Vorrichtungen (304-1 bis 304-$N_D$) empfangen werden, um ein globales ML-Modell (308) zum Schätzen des einen oder der mehreren ersten Parameter bereitzustellen;
    > Trainieren (1006) eines Netzwerk-ML-Modells (310) basierend auf Folgendem:

    >> den geschätzten Werten jedes des einen oder der mehreren Parameter, die durch die lokalen ML-Modelle (316) für die Trainingsepoche ausgegeben werden; und
    >> globalen Daten (312), die an dem Server (302) zur Verfügung stehen;
    >> wobei das Netzwerk-ML-Modell (310) ein neuronales Netzwerk zum Schätzen von einem oder mehreren zweiten Parametern umfasst; und
    >> Bereitstellen (1008-1 bis 1008-$N_D$) an jede Client-Vorrichtung (304) der Vielzahl von Client-Vorrichtungen (304-1 bis 304-$N_D$) des Folgenden:

    >>> des globalen ML-Modells (308); und
    >>> Rückkopplungsinformationen in Bezug auf eine von einer Vielzahl von versteckten neuronalen Netzwerkschichten des neuronalen Netzwerks, die in dem Netzwerk-ML-Modell (310) umfasst ist, zum Trainieren der lokalen ML-Modelle (316) an der Client-Vorrichtung (304); und
    >>> Wiederholen (1010) des Empfangens, Aggregierens, Trainierens und Bereitstellens für eine oder mehrere zusätzliche Trainingsepochen.

11. Server (302) nach Anspruch 10, wobei der Server (302) ferner dazu ausgelegt ist, das Verfahren nach einem der Ansprüche 2 bis 9 durchzuführen.

12. Computerimplementiertes Betriebsverfahren einer Client-Vorrichtung (304) für kaskadiertes föderiertes maschinelles Lernen, wobei das Verfahren Folgendes umfasst:
    für eine Trainingsepoche:
    Trainieren (1000) eines lokalen Modells (316) für maschinelles Lernen, ML, basierend auf Folgendem:

lokalen Daten (318), die an der Client-Vorrichtung (304) zur Verfügung stehen; und
Rückkopplungsinformationen, die von einem Server (302) empfangen werden, wobei sich die Rückkopplungsinformationen auf eine von einer Vielzahl von versteckten neuronalen Netzwerkschichten eines neuronalen Netzwerks beziehen, die in einem Netzwerk-ML-Modell (310), das an dem Server (302) trainiert wird, umfasst ist; wobei das lokale ML-Modell (316) dem Schätzen von einem oder mehreren ersten Parametern an der Client-Vorrichtung (304) dient und das Netzwerk-ML-Modell (310) dem Schätzen von einem oder mehreren zweiten Parametern an dem Server (302) dient;
Bereitstellen (1002) an den Server (302) des Folgenden:

des lokalen ML-Modells (316) für die Trainingsepoche; und
eines geschätzten Werts jedes des einen oder der mehreren ersten Parameter, die durch das lokale ML-Modell (316) an der Client-Vorrichtung (304) für die Trainingsepoche ausgegeben werden; und
iteratives Durchführen des Verfahrens für eine oder mehrere zusätzliche Trainingsepochen:

Empfangen (1008), an der Client-Vorrichtung (304), eines globalen ML-Modells (308), das eine Aggregation von lokalen ML-Modellen (316-1 bis 316-$N_D$), die von einer Vielzahl von Client-Vorrichtungen (304-1 bis 304-$N_D$) empfangen werden, einschließlich des lokalen ML-Modells (316) der Client-Vorrichtung (304) ist, Aktualisieren (1009) des lokalen ML-Modells (316) basierend auf dem globalen ML-Modell (308) und Bereitstellen des aktualisierten lokalen ML-Modells (316) an den Server (302) und
Empfangen (1008), von dem Server (302), der Rückkopplungsinformationen in Bezug auf die eine der Vielzahl von versteckten neuronalen Netzwerkschichten des neuronalen Netzwerks, die in dem Netzwerk-ML-Modell (310) umfasst ist.

**13.** Verfahren nach Anspruch 12, wobei der eine oder die mehreren ersten Parameter dieselben wie der eine oder die mehreren zweiten Parameter sind oder
wobei der eine oder die mehreren ersten Parameter sich von dem einen oder den mehreren zweiten Parametern unterscheiden.

**14.** Verfahren nach Anspruch 12, wobei es sich bei der Vielzahl von Client-Vorrichtungen (304-1 bis 304-$N_D$) um Benutzergeräte, UEs, (1612) in einem zellulären Kommunikationssystem (1600) handelt und der eine oder die mehreren ersten Parameter Hybrid-Automatic-Repeat-Request-Durchsatz, HARQ-Durchsatz, der UEs (1612) umfassen.

**Revendications**

**1.** Procédé informatique de fonctionnement d'un serveur (302) pour l'apprentissage automatique fédéré en cascade, comprenant :
pour une période d'apprentissage :
la réception (1002-1 à 1002-$N_D$), de chaque dispositif client (304) parmi une pluralité de dispositifs clients (304-1 à 304-$N_D$) :

d'un modèle d'apprentissage automatique, ML, local (316) permettant d'estimer un ou plusieurs premiers paramètres tels qu'entraînés sur le dispositif client (304) pour la période d'apprentissage ; et
d'une valeur estimée de chacun des premiers paramètres, générée par le modèle d'apprentissage automatique, ML, local (316) sur le dispositif client (304) pour la période d'apprentissage ;
l'agrégation (1004) des modèles ML locaux (316-1 à 316-$N_D$) reçus de la pluralité de dispositifs clients (304-1 à 304-$N_D$) afin de fournir un modèle ML global (308) permettant d'estimer les un ou plusieurs premiers paramètres ;
la formation (1006) d'un modèle ML de réseau (310) basé sur :

les valeurs estimées de chacun des paramètres générés par les modèles ML locaux (316) pour la période d'apprentissage ; et
des données globales (312) disponibles sur le serveur (302) ;
le modèle ML de réseau (310) comprenant un réseau neuronal permettant d'estimer un ou plusieurs seconds paramètres ; et
la fourniture (1008-1 à 1008-ND), à chaque dispositif client (304) de la pluralité de dispositifs clients (304-1 à 304-$N_D$) :

du modèle ML global (308) ; et

d'informations de rétroaction relatives à l'une des couches cachées du réseau neuronal, comprises dans le modèle ML de réseau (310), pour l'apprentissage des modèles ML locaux (316) au niveau du dispositif client (304) ; et

la répétition (1010) de la réception, de l'agrégation, de l'apprentissage et de la fourniture pour une ou plusieurs périodes d'apprentissage supplémentaires.

2. Procédé selon la revendication 1, dans lequel les un ou plusieurs premiers paramètres sont identiques aux un ou plusieurs seconds paramètres, ou

dans lequel les un ou plusieurs premiers paramètres sont différents des un ou plusieurs seconds paramètres.

3. Procédé selon l'une quelconque des revendications 1 ou 2, dans lequel la pluralité de dispositifs clients (304-1 à 304-$N_D$) sont des équipements utilisateurs (UE) (1612) d'un système de communication cellulaire (1600), et les un ou plusieurs premiers paramètres comprennent un débit demande de répétition automatique hybride, HARQ, des UE (1612).

4. Procédé selon l'une quelconque des revendications 1 à 3, dans lequel le modèle ML de réseau (310) est un réseau neuronal (600) comprenant :

un auto-encodeur modifié (700) comprenant une couche de réseau neuronal d'entrée (602) et un premier sous-ensemble (604-A) de la pluralité de couches cachées (604), l'auto-encodeur modifié (700) étant configuré pour compresser les données représentant une pluralité de caractéristiques d'entrée du modèle ML de réseau (310) afin de fournir des données compressées représentant la pluralité de caractéristiques d'entrée du modèle ML de réseau (310) ; et

un décodeur (702) comprenant un second sous-ensemble (604-B) de la pluralité de couches cachées (604) et fournissant la valeur estimée de chacun des seconds paramètres, sur la base des données compressées produites par l'auto-encodeur modifié (700).

5. Procédé selon l'une quelconque des revendications 1 à 3, dans lequel le modèle ML de réseau (310) comprend :

une fonction d'analyse en composantes principales, RCA, (900) configurée pour compresser les données représentant une pluralité de caractéristiques d'entrée du modèle ML de réseau (310) afin de fournir des données compressées représentant la pluralité de caractéristiques d'entrée du modèle ML de réseau (310) à l'aide de la RCA ; et

un décodeur (902) formé par le réseau neuronal et fournissant la valeur estimée de chacun des seconds paramètres à partir des données compressées produites par la fonction ACP (900).

6. Procédé selon la revendication 5, dans lequel la couche de réseau neuronal cachée à laquelle les informations de rétroaction sont liées est une couche de réseau neuronal cachée parmi la pluralité de couches de réseau neuronal cachées correspondant à une entrée du décodeur (902).

7. Procédé selon l'une quelconque des revendications 4 à 6, dans lequel la pluralité de caractéristiques d'entrée du modèle ML de réseau (310) comprend des premières caractéristiques d'entrée basées sur les données globales disponibles pour le serveur (302) et des secondes caractéristiques d'entrée basées sur les valeurs estimées de chacun des premiers paramètres reçus de la pluralité de dispositifs clients (304-1 à 304-$N_D$).

8. Procédé selon la revendication 7, dans lequel la pluralité de dispositifs clients (304-1 à 304-$N_D$) sont des équipements utilisateurs, UE, (1612) d'un système de communication cellulaire (1600), et les premières caractéristiques d'entrée comprennent : (a) l'identité de l'UE ; (b) l'identité de la cellule ; (c) l'identité de la station de base ; (d) l'identité de l'opérateur ; (e) le type de trafic ; (f) la période de la journée ; (g) le débit de la liaison montante ; (h) le débit de la liaison descendante ; (i) le type de trafic vidéo ; 0) la localisation de la cellule ; ou (j) une combinaison de deux ou plusieurs des éléments (a) à (1).

9. Procédé selon l'une quelconque des revendications 1 à 8, dans lequel la pluralité de dispositifs clients (304-1 à 304-$N_D$) sont des équipements utilisateurs, UE, (1612) d'un système de communication cellulaire (1600), et le serveur (302) est un nœud de réseau (1602) du système de communication cellulaire (1600).

10. Serveur (302) pour l'apprentissage automatique fédéré en cascade, le serveur (302) étant adapté pour :

pour une période d'apprentissage :
recevoir (1002-1 à 1002-ND), de chaque dispositif client (304) parmi une pluralité de dispositifs clients (304-1 à 304-$N_D$) :

un modèle d'apprentissage automatique, ML, local (316) permettant d'estimer un ou plusieurs premiers paramètres tels qu'entraînés sur le dispositif client (304) pour la période d'apprentissage ; et
une valeur estimée de chacun des premiers paramètres générée par le modèle d'apprentissage automatique, ML, local (316) sur le dispositif client (304) pour la période d'apprentissage ;
agréger (1004) les modèles ML locaux (316-1 à 316-$N_D$) reçus de la pluralité de dispositifs clients (304-1 à 304-$N_D$) afin de fournir un modèle ML global (308) permettant d'estimer les un ou plusieurs premiers paramètres ;
entraîner (1006) un modèle ML de réseau (310) basé sur :

les valeurs estimées de chacun des paramètres générés par les modèles ML locaux (316) pour la période d'apprentissage ; et
des données globales (312) disponibles sur le serveur (302) ;
le modèle ML de réseau (310) comprenant un réseau neuronal permettant d'estimer un ou plusieurs seconds paramètres ; et
fournir (1008-1 à 1008-ND), à chaque dispositif client (304) de la pluralité de dispositifs clients (304-1 à 304-$N_D$) :

le modèle ML global (308) ; et
des informations de rétroaction relatives à l'une des couches cachées du réseau neuronal comprises dans le modèle d'apprentissage automatique (310) pour l'apprentissage des modèles d'apprentissage automatique locaux (316) sur le dispositif client (304) ; et
répéter (1010) la réception, l'agrégation, l'apprentissage et la fourniture pour une ou plusieurs périodes d'apprentissage supplémentaires.

11. Serveur (302) selon la revendication 10, ledit serveur (302) étant en outre adapté pour mettre en œuvre le procédé selon l'une quelconque des revendications 2 à 9.

12. Procédé informatique de fonctionnement d'un dispositif client (304) pour l'apprentissage automatique fédéré en cascade, ledit procédé comprenant :
pour une période d'apprentissage :
l'apprentissage (1000) d'un modèle d'apprentissage automatique local (316) basé sur :

des données locales (318) disponibles sur le dispositif client (304) ; et
des informations de rétroaction reçues d'un serveur (302), les informations de rétroaction étant liées à l'une des couches cachées d'un réseau neuronal, comprises dans un modèle ML de réseau (310) entraîné sur le serveur (302) ;
le modèle ML local (316) étant destiné à estimer un ou plusieurs premiers paramètres sur le dispositif client (304), et le modèle ML de réseau (310) étant destiné à estimer un ou plusieurs seconds paramètres sur le serveur (302) ;
la fourniture (1002) au serveur (302) :

du modèle ML local (316) pour la période d'apprentissage; et
d'une valeur estimée de chacun des premiers paramètres générés par le modèle ML local (316) sur le dispositif client (304) pour la période d'apprentissage ; et
la mise en œuvre du procédé de manière itérative pour une ou plusieurs périodes d'apprentissage supplémentaires :
la réception (1008) sur le dispositif client (304) d'un modèle ML global (308) agrégatif de modèles ML locaux (316-1 à 316-ND) reçus de plusieurs dispositifs clients (304-1 à 304-ND), dont le modèle ML local (316) du dispositif client (304), la mise à jour (1009) du modèle ML local (316) à partir du modèle ML global (308) et la fourniture du modèle ML local (316) mis à jour au serveur (302), et la réception (1008) depuis le serveur (302) des informations de rétroaction relatives à l'une des couches cachées du réseau neuronal comprises dans le modèle ML de réseau (310).

13. Procédé selon la revendication 12, dans lequel les un ou plusieurs premiers paramètres sont identiques aux un ou plusieurs seconds paramètres, ou
dans lequel les un ou plusieurs premiers paramètres sont différents des un ou plusieurs seconds paramètres.

**14.** Procédé selon la revendication 12, dans lequel la pluralité de dispositifs clients (304-1 à 304-$N_D$) sont des équipements utilisateurs, UE, (1612) dans un système de communication cellulaire (1600), et les un ou plusieurs premiers paramètres comprennent un débit de demande de répétition automatique hybride, HARQ, des UE (1612).

FEDERATED MACHINE LEARNING

100

SERVER
102

FEDERATED ML
SERVER
106

GLOBAL ML
MODEL
108

GLOBAL ML MODEL = UNION OF LOCAL
ML MODELS RECEIVED FROM THE
CLIENT DEVICES 104

GLOBAL ML
MODEL

LOCAL ML
MODEL

LOCAL ML
MODEL

GLOBAL ML
MODEL

CLIENT DEVICE
104-1

FEDERATED ML
CLIENT
110-1

LOCAL ML
MODEL
112-1

LOCAL DATA
114-1

• • •

CLIENT DEVICE
104-N$_C$

FEDERATED ML
CLIENT
110-N$_C$

LOCAL ML
MODEL
112-N$_C$

LOCAL DATA
114-N$_C$

*FIG. 1*

EP 4 078 899 B1

CASCADED FEDERATED MACHINE LEARNING

200

**SERVER**
**202**

CASCADED
FEDERATED ML
SERVER
**206**

GLOBAL ML MODEL
**208**

NETWORK ML MODEL
**210**

GLOBAL DATA
**212**

GLOBAL ML MODEL = UNION OF LOCAL
ML MODELS RECEIVED FROM THE
CLIENT DEVICES 104

NETWORK ML MODEL TRAINED BASED
ON GLOBAL DATA AND OUTPUTS OF
LOCAL ML MODELS

GLOBAL ML MODEL
AND OUTPUT OF
NETWORK ML MODEL

LOCAL ML MODEL
AND OUTPUT OF
LOCAL ML MODEL

LOCAL ML MODEL
AND OUTPUT OF
LOCAL ML MODEL

GLOBAL ML MODEL
AND OUTPUT OF
NETWORK ML MODEL

LOCAL ML MODEL
TRAINED BASED ON
LOCAL DATA AND
OUTPUT OF
NETWORK ML MODEL

**CLIENT DEVICE**
**204-1**

CASCADED
FEDERATED ML
CLIENT
**214-1**

LOCAL ML
MODEL
**216-1**

LOCAL DATA
**218-1**

● ● ●

**CLIENT DEVICE**
**204-$N_C$**

FEDERATED ML
CLIENT
**214-$N_C$**

LOCAL ML
MODEL
**216-$N_C$**

LOCAL DATA
**218-$N_C$**

*FIG. 2*

EP 4 078 899 B1

CASCADED FEDERATED MACHINE LEARNING WITH ENHANCED FEEDBACK

300

**SERVER**
**302**

CASCADED FEDERATED ML SERVER
**306**

GLOBAL ML MODEL
**308**

NETWORK ML MODEL
**310**

GLOBAL DATA
**312**

GLOBAL ML MODEL = UNION OF LOCAL ML MODELS RECEIVED FROM THE CLIENT DEVICES 104

NETWORK ML MODEL TRAINED BASED ON GLOBAL DATA AND OUTPUTS OF LOCAL ML MODELS

GLOBAL ML MODEL AND *FEEDBACK FROM HIDDEN NODE OF NETWORK ML MODEL*

LOCAL ML MODEL AND OUTPUT OF LOCAL ML MODEL

LOCAL ML MODEL AND OUTPUT OF LOCAL ML MODEL

GLOBAL ML MODEL AND FEEDBACK FROM HIDDEN NODE OF NETWORK ML MODEL

LOCAL ML MODEL TRAINED BASED ON LOCAL DATA AND *FEEDBACK FROM HIDDEN NODE OF NETWORK ML MODEL*

**CLIENT DEVICE**
**304-1**

CASCADED FEDERATED ML CLIENT
**314-1**

LOCAL ML MODEL
**316-1**

LOCAL DATA
**318-1**

• • •

**CLIENT DEVICE**
**304-N$_C$**

FEDERATED ML CLIENT
**314-N$_C$**

LOCAL ML MODEL
**316-N$_C$**

LOCAL DATA
**318-N$_C$**

*FIG. 3*

EP 4 078 899 B1

FEEDBACK FROM HIDDEN LAYER OF THE NETWORK ML MODEL 502

LOCAL DATA 318

LOCAL ML MODEL (AT CLIENT) 316

LOCAL ML MODEL OUTPUT PARAMETER(S) 400

**FIG. 4**

EP 4 078 899 B1

**FIG. 5**

NETWORK ML MODEL 310

NEURAL NETWORK 600

INPUT LAYER 602

$I_1$  $I_2$  • • •  $I_X$  $I_{X+1}$  $I_{X+2}$  • • •  $I_{X+Y}$

HIDDEN LAYERS 604

OUTPUT LAYER 606

NETWORK ML MODEL OUTPUT PARAMETER(S)

FEEDBACK FROM HIDDEN LAYER SENT TO CLIENT DEVICES 304

CLIENT ML MODEL OUTPUT PARAMETERS RECEIVED FROM THE CLIENT DEVICES 304

GLOBAL DATA 312

*FIG. 6*

**FIG. 7**

MODIFIED AUTO-ENCODER 700

HIDDEN LAYERS 604A

COMPRESSION POINT 704

TO DECODER 702

FEEDBACK FROM HIDDEN LAYER SENT TO CLIENT DEVICES 304 502

EP 4 078 899 B1

FIG. 8

**FIG. 9**

| SERVER 302 | | CLIENT DEVICE 304-1 | • • • | CLIENT DEVICE 304-$N_D$ |
|---|---|---|---|---|

1000-1. TRAIN LOCAL ML MODEL FOR ONE TRAINING EPOCH BASED ON LOCAL DATA AND, IF AVAILABLE, FEEDBACK FROM HIDDEN LAYER OF NETWORK ML MODEL

1000-$N_D$. TRAIN LOCAL ML MODEL FOR ONE TRAINING EPOCH BASED ON LOCAL DATA AND, IF AVAILABLE, FEEDBACK FROM HIDDEN LAYER OF NETWORK ML MODEL

1002-1. LOCAL ML MODEL AND OUTPUT PARAMETER(S) FROM THE LOCAL ML MODEL

1002-$N_D$. LOCAL ML MODEL AND OUTPUT PARAMETER(S) FROM THE LOCAL ML MODEL

1004. AGGREGATE LOCAL ML MODELS TO PROVIDE THE GLOBAL ML MODEL

1006. TRAIN NETWORK ML MODEL FOR ONE TRAINING EPOCH BASED ON GLOBAL DATA AND THE RECEIVED OUTPUT PARAMETERS FROM THE LOCAL ML MODELS OF THE CLIENT DEVICES 304

1008-1. GLOBAL MODEL AND FEEDBACK FROM HIDDEN LAYER OF THE NETWORK ML MODEL

1008-$N_D$. GLOBAL MODEL AND FEEDBACK FROM HIDDEN LAYER OF THE NETWORK ML MODEL

1010. REPEAT PROCESS FOR ADDITIONAL TRAINING EPOCHS

*FIG. 10*

SERVER
302

COMM.
INTERFACE(S)
1104

PROCESSOR(S)
1100

MEMORY
1102

**FIG. 11**

SERVER
302

MODULE(S)
1300

**FIG. 13**

**FIG. 12**

CLIENT DEVICE
304

COMM.
INTERFACE(S)
1404

PROCESSOR(S)
1400

MEMORY
1402

**FIG. 14**

CLIENT DEVICE
304

MODULE(S)
1500

**FIG. 15**

**FIG. 16**

EP 4 078 899 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018057302 A1